# EUROPÄISCHE PATENTSCHRIFT

(11) **EP 3 447 283 B1**
(45) Veröffentlichungstag und Bekanntmachung des Hinweises auf die Patenterteilung: **01.12.2021**
(21) Anmeldenummer: 17187168.4
(22) Anmeldetag: 22.08.2017
(51) Int. Cl.: F03D 13/20, F03D 80/00, F16M 1/04

(54) **GONDEL FÜR EINE WINDENERGIEANLAGE UND GENERATORTRÄGER**
NACELLE FOR A WIND TURBINE AND GENERATOR HOLDER
NACELLE D'ÉOLIENNE ET SUPPORT DE GÉNÉRATEUR

(43) Veröffentlichungstag der Anmeldung: 27.02.2019
(73) Patentinhaber: Nordex Energy SE & Co. KG, 22419 Hamburg (DE)
(72) Erfinder: Wackrow, Torsten, 18119 Rostock (DE)
(74) Vertreter: Grünbaum, Annekathrin

(56) Entgegenhaltungen:
- EP-A2- 2 136 074
- DE-A1-102008 046 210
- DE-A1-102015 223 163
- DE-B3-102011 007 836
- US-A1- 2011 204 649

## Beschreibung

Die vorliegende Erfindung betrifft eine Struktur eines Generatorträgers für eine Gondel einer Windenergieanlage und die.

Eine Windenergieanlage besteht üblicherweise aus einem Turm und einer um die Längsachse des Turms drehbar auf dem Turmkopf gelagerten Gondel. Die Gondel trägt den Rotor mit einer Rotornabe und mindestens einem Rotorblatt sowie einen Generator, der die von dem Rotor aus dem Wind entnommene Energie in elektrische Energie umwandelt.

Die Gondel einer Windenergieanlage umfasst eine Tragstruktur sowie eine nichttragende Gondelverkleidung mit einem Tragwerk, bestehend aus Streben und Profilen. Im Innern der Gondel sind auf der Tragstruktur verschiedene Anlagenkomponenten angeordnet. Insbesondere ist der Teil der Gondel Gegenstand der Erfindung, der als Generatorträger ausgebildet ist.

Die Tragstruktur umfasst üblicherweise einen Maschinenträger aus Guss und einen Generatorträger als Schweißkonstruktion. Die Gondelverkleidung schützt die Komponenten im Inneren der Gondel gegen äußere Umwelteinflüsse. Für Windenergieanlagen und deren Einsatzbedingungen ist die Stabilität der Gondel von besonderer Bedeutung.

Im Zuge des Wettbewerbs der Windbranche verlangt der Markt weitere Erhöhungen der Nennleistung von Windenergieanlagen. Bei Erhöhung der Leistungsklasse sowie bei der gewünschten Integration der Mittelspannungskomponenten in die Gondel muss der vorhandene Raum innerhalb der Gondel effizienter genutzt werden. Durch die heutige Generatorträgerkonstruktion wird relativ viel Höhe innerhalb der Gondel verschenkt. Gleichzeitig wird eine steifere Tragstruktur benötigt, welche zusätzliche Anlagenkomponenten tragen kann, die im Innern der Gondel unterzubringen sind.

So ist eine Reihe von Veröffentlichungen bekannt, welche für die Gondel eine Rahmenkonstruktion aus Profilstäben aus versteiftem Aluminium- oder Stahlblech vorsehen. Dabei können der Maschinenträger und der Generatorträger als eine Einheit (DE 102014208934 B4 oder zwei- bzw. mehrteilig (EP 2136074 A2, DE 102015223163 A1, EP 2161445 A1, WO 2011/051272 A2) ausgeführt sein.

Anlagenkomponenten wie beispielsweise der Generator sind in den meisten Anwendungen auf der Tragstruktur im Innern der Gondel montiert, wobei die Tragstruktur einen bestimmten Abstand zum Boden der Gondelverkleidung aufweist, sodass der Generator nicht direkt auf den Boden der Gondelverkleidung aufgesetzt werden kann.

Herkömmliche Generatorträger bestehen aus zwei außen liegenden Längsträgern, welche über eine schubsteife Struktur miteinander verbunden sind. Je nach Anforderung müssen die Längsträger entsprechend hoch sein, damit sie das nötige Widerstandsmoment besitzen.

In WO 2010/142304 A1 wird eine Gondel einer Windenergieanlage beschrieben, wobei die Gondel einen Grundrahmen aufweist, welcher auf der dem Rotor abgewandten Seite eine zum Abstützen von Anlagenkomponenten dienende Trägeranordnung umfasst. Die Trägeranordnung weist eine Abstützfläche und eine zumindest teilweise mit Abstand oberhalb der Abstützfläche angeordnete Stabilisierungseinrichtung auf.

DE 102011007836 B3 offenbart einen Maschinenträger einer Windenergieanlage, welcher einen Hauptträger und einen Heckträger aufweist. Der Generatorträger und der Maschinenträger bilden zusammen eine u-förmige Last aufnehmende Struktur. Ausgehend von dieser u-förmigen Struktur sind zwei Tragarme angeordnet.

In US 2011/204649 A1 wird ein System zur Versteifung und Vorspannung eines Generatorrahmens in einer Windkraftanlage offenbart. Der Generatorrahmen besteht an seinem vorderen Ende aus einer Auflage für den Generator und einem anschließenden leiterförmigen Träger, welcher durch das System zur Versteifung und Vorspannung stabil gehalten werden soll. Das System umfasst eine Vielzahl von spannungsinduzierenden Stäben. Mindestens einige der Stäbe sind mit einem Ende über eine Kupplungsplatte miteinander verbunden. Das andere Ende der Stäbe wird mittels Halterungen mit dem Generatorrahmen verbunden.

DE 102008046210 A1 bezieht sich auf einen Tragrahmen für einen Generator einer Windenergieanlage mit zwei unter einem gegenseitigen Abstand im Wesentlichen zueinander parallel angeordneten Hauptträgern welche über Anschlussplatten mit an einem Grundrahmen eines Maschinenträgers befestigbar und über eine Diagonalstrebe miteinander verbunden sind. Durch die Diagonalstrebe entsteht eine schubsteife Konstruktion.

### Darstellung der Erfindung

Es ist Aufgabe der Erfindung, große und schwere Komponenten (Generator, Transformator, Schaltschrank usw.) weit hinten und seitlich auf dem Generatorträger zu platzieren und damit mehr nutzbaren Raum innerhalb der Gondel, insbesondere in der Höhe zu schaffen. Außerdem soll die Struktur des Generatorträgers verstärkt werden, um höhere Lasten in den Maschinenträger einleiten zu können.

Gelöst wird die Aufgabe durch die in den Patentansprüchen offenbarten Merkmale.

Die Gondel für eine Windenergieanlage umfasst eine Tragstruktur, welche aus einem Maschinenträger und einem Generatorträger besteht, welche in üblicher Weise über Verbindungselemente miteinander verbunden sind.

Die Aufgabe wird gelöst durch einen Generatorträger für eine Tragstruktur für eine Gondel einer Windenergieanlage. Die Tragstruktur umfasst einen Maschinenträger und den Generatorträger. Der Generatorträger ist als y-förmige Struktur aufgebaut. Die y-förmige Struktur wird durch einen Mittelträger und zwei, sich direkt an den Mittelträger anschließende Tragarme gebildet und kann ein- oder mehrteilig in Stahl- oder Gussbauweise gefertigt sein. Die Tragarme sind an der dem Mittelträger gegenüber liegenden Seite mit dem Maschinenträger über Verbindungselemente fest verbunden.

Für eine wesentliche Ausführungsform sind seitlich an dem Mittelträger Balkone mit einer geringen Trägerhöhe angeordnet, d.h. die Trägerhöhe liegt auf einem niedrigeren Niveau verglichen mit dem Mittelträger.

Durch die erfindungsgemäße Lösung wird innerhalb der Gondel mehr nutzbarer Raum, insbesondere in der Höhe, geschaffen. Gegenüber anderen Lösungskonzepten ergeben sich hier erhebliche Kostenvorteile. Der Generatorträger wird verstärkt/versteift und bewirkt eine hohe Stabilität der gesamten Struktur, sodass hohe Lasten in den Maschinenträger eingeleitet werden können.

Durch die erfindungsgemäße Lösung wird die Situation geschaffen, dass die hohen seitlichen Komponenten sehr tief an den Mittelträger angeschlossen werden können und gleichzeitig hohe Massen abgetragen werden können.

### Ausführung der Erfindung

Die Erfindung wird anhand von Zeichnungen näher erläutert. Hierzu zeigen:
- Figur 1: eine Tragstruktur mit einem Maschinenträger und einem erfindungsgemäßen Generatorträger und
- Figur 2: einen erfindungsgemäßen Generatorträger aus einer anderen Perspektive.

Die Gondel einer Windenergieanlage trägt einen Rotor mit einer Rotornabe und mindestens einem Rotorblatt sowie einen Generator, wobei auf der dem Rotor abgewandten Seite eine zum Abstützen von Anlagenkomponenten dienende Tragstruktur angeordnet ist. Die Tragstruktur besteht üblicherweise aus einem Maschinenträger MT, beispielsweise aus Guss und im hinteren Bereich der Gondel aus einem Generatorträger GT, beispielsweise als Schweißkonstruktion. Der Generatorträger GT trägt Anlagenkomponenten, welche im hinteren Bereich der Gondel angeordnet sind, wie beispielsweise einen Generator, einen Transformator und/oder einen Schaltschrank.

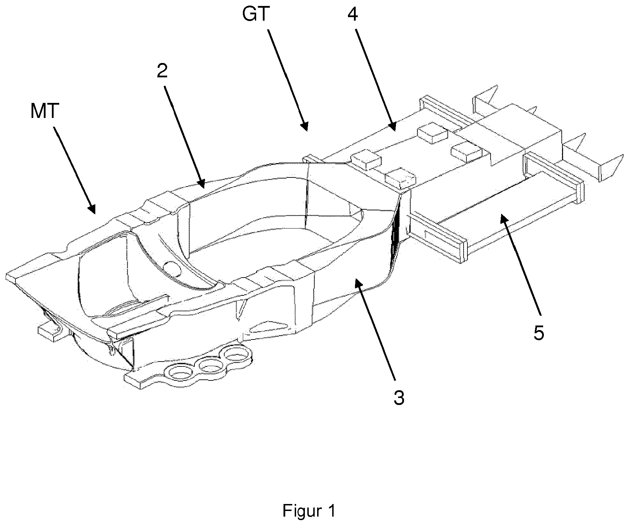

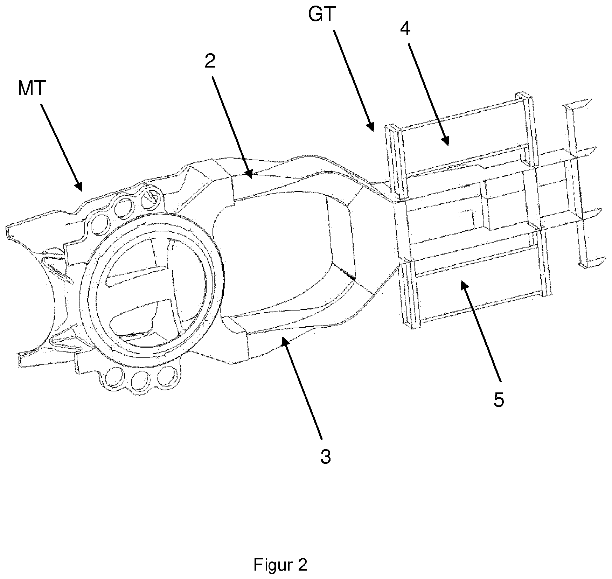

Figur 1 zeigt die Tragstruktur mit dem Maschinenträger MT und dem erfindungsgemäßen Generatorträger GT. Der Generatorträger GT wird in üblicher Weise über Verbindungselemente mit dem Maschinenträger MT verbunden. Der Generatorträger GT (Figur 2) setzt sich aus einem Mittelträger 1 und zwei, sich direkt an den Mittelträger 1 anschließenden Tragarmen 2 und 3 zusammen. Der Generatorträger GT kann ein- oder mehrteilig in Stahl- oder Gussbauweise gefertigt sein.

Der Mittelträger 1 hat eine Längsachse, welche die Kräfte der zu tragenden Lasten in die Mitte der Tragstruktur verlagert. Auf dem Mittelträger 1 wird der hier nicht gezeigte Generator gelagert, welcher sehr weit oben steht. Dadurch kann in der Mitte unter dem Generator eine sehr hohe Tragstruktur erreicht werden. An den Mittelträger 1 schließen sich die Tragarme 2 und 3 v-förmig oder in einer ähnlichen Form an, so dass zusammen mit dem Mittelträger 1 eine y-förmige Struktur entsteht. Die Tragarme 2 und 3 bilden den vorderen Generatorträger GT. In dem gezeigten Ausführungsbeispiel sind die Tragarme 2 und 3 in einer offenen Metallkonstruktion hergestellt. Diese offene Metallkonstruktion zeigt sich darin, dass ein äußerer Rahmen besteht, in welchem durch gezielt angeordnete Streben eine relativ leichte aber dennoch stabile, hohe Lasten aufnehmende Konstruktion erreicht wird. Durch den Aufbau einer derartigen Tragstruktur des Generatorträgers GT, welcher auch als Y-Generatorträger bezeichnet werden kann und bei dem zwei Stränge (Tragarme 2 und 3) zu einem Strang (Mittelträger 1) zusammengeführt werden, werden die Kräfte über den Mittelträger 1 abgeleitet und es können höhere Lasten in den Maschinenträger MT eingeleitet werden.

Mit dem Mittelträger 1 sind seitlich sogenannte Balkone 4 und 5 in der Art verbunden, dass große und schwere Anlagenkomponenten, wie beispielsweise ein Transformator und/oder ein Schaltschrank, auf diesen Balkonen 4 und 5 platziert werden können. Die seitlichen Balkone 4 und 5 liegen maximal tief und können sehr hohe, hier nicht gezeigte, Anlagenkomponenten tragen. Die aufgenommene Last der Anlagenkomponenten auf den Balkonen 4 und 5 wird in den extrem stabilen Mittelträger 1 eingeleitet, anstatt die Lasten gleich über Träger an den Maschinenträger MT abzuleiten. Der Vorteil der Balkone 4 und 5 ist es, dass diese eine geringe Trägerhöhe haben, wodurch mehr nutzbarer Raum innerhalb der Gondel, insbesondere in der Höhe entsteht.

Da es sich bei der vorhergehenden, detailliert beschriebenen Gondel für eine Windenergieanlage um ein Ausführungsbeispiel handelt, kann diese in üblicher Weise vom Fachmann in einem weiten Umfang modifiziert werden, ohne den Bereich der Erfindung zu verlassen, wobei die Erfindung in den Ansprüchen definiert ist.

So kann der Generatorträger GT ein- oder mehrteilig in Stahl- oder Gussbauweise gefertigt sein. Weiter schließt die Verwendung der unbestimmten Artikel "ein" bzw. "eine" nicht aus, dass die betreffenden Merkmale auch mehrfach vorhanden sein können.

### Bezugszeichen

- 1: Mittelträger
- 2: Tragarm
- 3: Tragarm
- 4: Balkon
- 5: Balkon
- MT: Maschinenträger
- GT: Generatorträger

## Patentansprüche

1. Generatorträger (GT) für eine Tragstruktur, welche einen Maschinenträger (MT) und den Generatorträger (GT) umfasst, für eine Gondel einer Windenergieanlage, **dadurch gekennzeichnet, dass** der Generatorträger (GT) als y-förmige Struktur aufgebaut ist in der Art, dass ein Mittelträger (1) und zwei, sich direkt an den Mittelträger (1) anschließende Tragarme (2, 3) die y-förmige Struktur bilden.

2. Generatorträger (GT) nach Anspruch 1 **dadurch gekennzeichnet, dass** die Tragarme (2, 3) an der dem Mittelträger (1) gegenüber liegender Seite mit dem Maschinenträger (MT) über Verbindungselemente fest verbunden sind.

3. Generatorträger (GT) nach Anspruch 1 oder 2 **dadurch gekennzeichnet, dass**
seitlich an dem Mittelträger (1) Balkone (4, 5) mit einer geringeren Höhe als die des Mittelträgers (1) angeordnet sind.

4. Generatorträger (GT) nach Anspruch 1, 2 oder 3 **dadurch gekennzeichnet, dass**
der Generatorträger (GT) ein- oder mehrteilig in Stahl- oder Gussbauweise gefertigt ist.

## Claims

1. Generator frame (GT) for a supporting structure, which comprises a machine frame (MT) and the generator frame (GT), for a nacelle of a wind turbine, **characterized in that** the generator frame (GT) is constructed as a y-shaped structure in such a way that a central support (1) and two supporting arms (2, 3) which directly adjoin the central support (1) form the y-shaped structure.

2. Generator frame (GT) according to Claim 1, **characterized in that** the supporting arms (2, 3) are fixedly connected, on the side situated opposite the central support (1), to the machine frame (MT) by means of connecting elements.

3. Generator frame (GT) according to Claim 1 or 2, **characterized in that** balconies (4, 5) having a smaller height than that of the central support (1) are arranged laterally on the central support (1).

4. Generator frame (GT) according to Claim 1, 2 or 3, **characterized in that** the generator frame (GT) is manufactured in one or more parts as a steel or cast iron construction.

## Revendications

1. Support de générateur (GT) pour une structure portante qui comprend un support de machine (MT) et le support de générateur (GT) pour une nacelle d'une éolienne,
**caractérisé en ce que** le support de générateur (GT) est réalisé sous la forme d'une structure en forme de Y de telle sorte qu'un support central (1) et deux bras porteurs (2, 3) directement adjacents au support central (1) forment la structure en forme de Y.

2. Support de générateur (GT) selon la revendication 1, **caractérisé en ce que** les bras porteurs (2, 3) sont reliés solidement au support de machine (MT) par des éléments de liaison, du côté opposé au support central (1).

3. Support de générateur (GT) selon la revendication 1 ou 2, **caractérisé en ce que** des balcons (4, 5) d'une hauteur inférieure à celle du support central (1) sont disposés latéralement sur le support central (1).

4. Support de générateur (GT) selon la revendication 1, 2, 3, **caractérisé en ce que** le support de générateur (GT) est fabriqué en une ou plusieurs parties en construction d'acier ou de fonte.
